(19) Europäisches Patentamt
European Patent Office
Office européen des brevets

(11) **EP 3 450 919 A1**

(12) **EUROPEAN PATENT APPLICATION**

(43) Date of publication:
06.03.2019 Bulletin 2019/10

(51) Int Cl.:
**G01C 21/34** (2006.01)   **G01C 21/26** (2006.01)

(21) Application number: 18161168.2

(22) Date of filing: 12.03.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 31.08.2017   JP 2017167861

(71) Applicants:
• **Kabushiki Kaisha Toshiba**
**Minato-ku,**
**Tokyo (JP)**

• **Toshiba Infrastructure Systems & Solutions Corporation**
**Kawasaki-shi, Kanagawa 212-8585 (JP)**

(72) Inventors:
• **FUKUSHIMA, Arika**
**Tokyo (JP)**
• **AISU, Hideyuki**
**Tokyo (JP)**

(74) Representative: **Hoffmann Eitle**
**Patent- und Rechtsanwälte PartmbB**
**Arabellastraße 30**
**81925 München (DE)**

(54) **ROUTE ESTIMATION APPARATUS AND ROUTE ESTIMATION METHOD**

(57) According to one embodiment, a route estimation apparatus includes an information communicator (18) and a route estimator (13). The information communicator (18) is configured to acquire position history information of a mobile body from an information apparatus via a communication network. The route estimator (13) is configured to estimate a movement route used by the mobile body to move from a first position to a second position, using the position history information and route information indicating routes among a plurality of positions and characteristics of the routes.

FIG. 1

**Description**

FIELD

Embodiments described herein relate to a route estimation apparatus and a route estimation method.

BACKGROUND

A mobile body such as an electric car, an airplane, a drone, an electric motorcycle and a car equipped with a diesel engine needs to be supplied with energy at an energy supply point. A mobile body needs to use the supplied, limited energy to arrive at the next energy supply point. Since energy supply points are geographically limited, it is required to be able to predict energy consumption of the mobile body to decide the next energy supply point of the mobile body. A lot of methods therefor have been proposed.

As a method for predicting energy consumption, it is common to build an energy consumption model and make prediction using the built model. It is necessary to estimate parameters of the model to build the model. At the time of estimating the parameters, history information which includes information of energy consumption at the time of a mobile body traveling on a movement route and information of the movement route is necessary as learning data.

As a method for acquiring the history information, it is conceivable to acquire the history information directly from a mobile body. In this method, however, it is necessary to individually communicate with each mobile body to acquire the history information. Therefore, cost for communication with mobile bodies, management cost and data collection cost are high. Especially, since it is necessary to acquire the history information from a lot of mobile bodies in order to improve prediction accuracy, the costs become enormous.

BRIEF DESCRIPTION OF THE DRAWINGS

FIG. 1 is a block diagram of a route estimation apparatus as an embodiment of the present invention;
FIG. 2 is a diagram showing an example of an energy supply history database;
FIG. 3 is a diagram showing an example of a route information database;
FIG. 4 is a diagram showing an example of an adjacency matrix;
FIG. 5 is a diagram showing an example of a network structure of energy supply points;
FIG. 6A is a diagram showing an example of calculating an amount of energy consumption;
FIG. 6B is a diagram showing another example of calculating an amount of energy consumption;
FIG. 7 is a diagram showing an example of a learning database;
FIG. 8 is a diagram showing a detailed configuration example of a route estimator;
FIG. 9 is a diagram showing an example of a query;
FIG. 10 is a diagram showing an example of movement route estimation information;
FIG. 11 is a diagram showing a specific example of an estimated movement route;
FIG. 12 is a diagram showing an example of a built multiple regression model;
FIG. 13 is a flowchart showing an operation example of the route estimation apparatus according to the present embodiment;
FIG. 14 is a diagram showing a route information generation apparatus and a traffic control server;
FIG. 15 is a diagram showing an example of a TC information database;
FIG. 16 is a diagram showing an example of a speed information database;
FIG. 17 is a diagram showing an example of a configuration which makes it possible to acquire a history of an EV movement route by ETC2.0;
FIG. 18 is a diagram showing a system configuration for acquiring energy supply history data;
FIG. 19 is a diagram showing another system configuration for acquiring the energy supply history data;
FIG. 20 is a diagram showing a result of factor analysis;
FIG. 21 is an overall configuration diagram of a prediction system ;
FIG. 22 is a diagram for illustrating an operation example of a prediction server; and
FIG. 23 is a diagram showing a hardware configuration of the route estimation apparatus.

DETAILED DESCRIPTION

According to one embodiment, a route estimation apparatus includes an information communicator and a route estimator. The information communicator is configured to acquire position history information of a mobile body from an information apparatus via a communication network. The route estimator is configured to estimate a movement route used by the mobile body to move from a first position to a second position, using the position history information and route information indicating routes among a plurality of positions and characteristics of the routes.

Embodiments of the present invention will be described below with reference to drawings. Though the description below will be made on a case where a mobile body is an electric vehicle (hereinafter referred to as an EV) as an example, the present invention can be practiced in any other mobile body than an EV. As examples of such a mobile body, an airplane, a drone, an electric motorcycle and a car equipped with a diesel engine are given.

An EV travels on a road to move to various points using electric power charged in a battery (charged energy). In the present embodiments, especially energy supply points where an EV is charged will be dealt with as the points. The points in the present embodiment, however, are not limited to the energy supply points but may be arbitrary points on a map. For example, a home, a restaurant, a store and a point arbitrarily specified by an EV user are possible.

An EV is supplied with electric power at an energy supply point and accumulates the supplied electric power in a battery. The EV moves using the electric power accumulated in the battery. The EV needs to move to the next energy supply point to be supplied with electric power there before running out of the electric power of the battery. Thus, the EV is to be charged at each energy supply point before arriving at a destination. An energy supply point is provided with one or more chargers (energy suppliers), and the EV wiredly or wirelessly connects to any of the chargers to be supplied with electric power. The present embodiment assumes such a situation.

Since the present embodiment assumes that a mobile body is an EV, energy supply refers to charging, an energy supply point to a charging stand and an energy supplier to a charger. However, a process similar to that of the present embodiment is also possible for any other mobile body than an EV, for example, by replacing the charging, charging stand and charger with fuel supply, gasoline station and fuel supplier if a mobile body is a gasoline-powered vehicle.

(First embodiment)

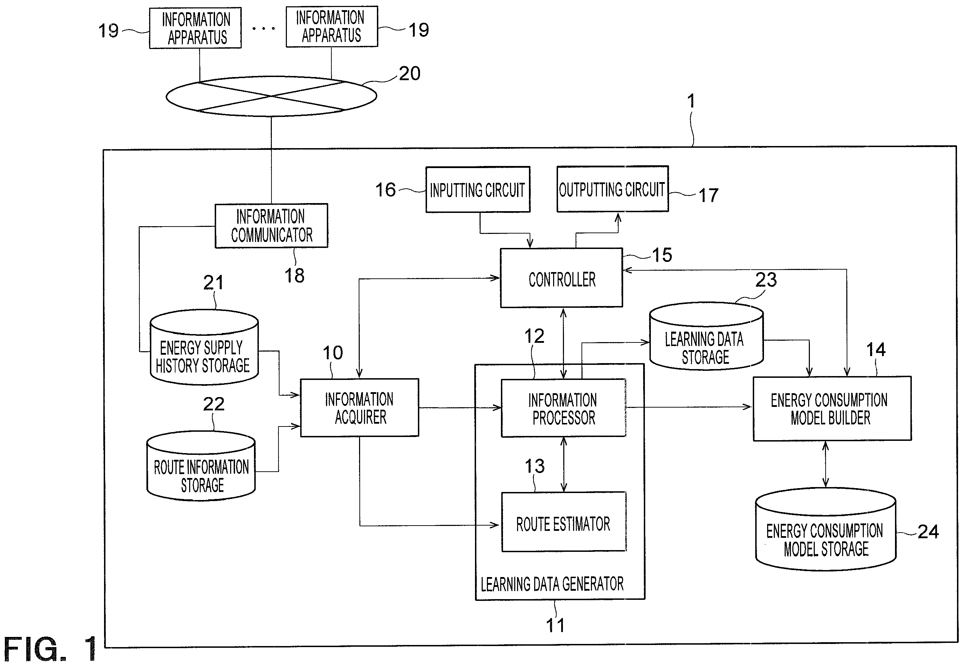

FIG. 1 is a block diagram of a route estimation apparatus as an embodiment of the present invention. A route estimation apparatus 1 is provided with an information acquirer 10, a learning data generator 11, an energy consumption model builder (a model builder) 14, a controller 15, an inputting circuit 16, an outputting circuit 17 and an information communicator 18. The learning data generator 11 is provided with an information processor 12 and a route estimator 13. Further, the route estimation apparatus 1 is provided with an energy supply history storage 21, a route information storage 22, a learning data storage 23 and an energy consumption model storage (a model storage) 24. These storages are hardware storage devices such as a memory device, a hard disk device and an SSD device.

The inputting circuit 16 is an input interface for a user of the present apparatus (hereinafter, an operator) to input parameter design information required for an operation of the present apparatus or input an instruction.

The outputting circuit 17 is an output interface for displaying information or data generated by the present apparatus.

The information communicator 18 acquires information of one or more EVs from one or more information apparatuses 19 different from an EV via a communication network 20, and stores the acquired information into an energy supply history database (DB) in the energy supply history storage 21. The communication network 20 is a wired or wireless network or a wired/wireless hybrid network. The information apparatus 19 is, for example, a charger installed at an energy supply point (hereinafter referred to as a supply point) where an EV is charged, a terminal apparatus used by an EV user (a smartphone, a tablet apparatus, a notebook PC or the like) and an ETC2.0 apparatus. The ETC2.0 apparatus is an example of a data communication device communicable with at least one of a user's terminal apparatus and EV (for example, a car navigation device mounted on the EV) and is arranged at each of a plurality of predetermined spots in a traveling area. The predetermined spots may be an ITS spot, a position along a route, a highway service area, a building and the like. In the case of providing a gateway apparatus communicable with one or more chargers installed at energy supply positions to collect information of the one or more chargers from the gateway apparatus, the case corresponds to one form of an operation of collecting information from chargers.

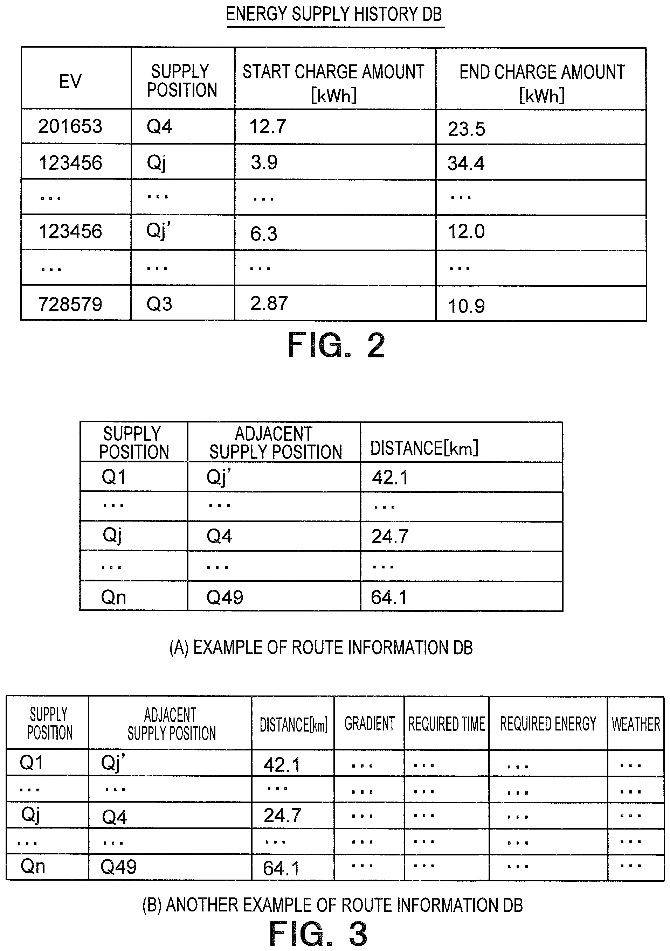

The energy supply history storage 21 stores the energy supply history DB. FIG. 2 shows an example of the energy supply history DB. Though a case is assumed in the present example where information is acquired from chargers and stored into the energy supply history DB, such a case is also possible that users input information of charging stands or chargers to applications of smartphones, and the information is collected from the smartphones and stored into the energy supply history DB. The same goes for the case of collecting information from ETC2.0 apparatuses.

The energy supply history DB holds information of an EV identifier (ID), supply position IDs, start amounts of charge and end amounts of charge as energy supply history information of each EV.

The EV ID is an identifier for recognizing each of EVs (EV1, EV2, EV3, ..., EVi). For example, an ID of EVi is "123456".

The supply position IDs are identifiers identifying energy supply positions (hereinafter referred to as supply positions) where the EV was charged. Where on a map the supply positions exist can be separately grasped by map information. For example, the map information holds each supply position ID and coordinates on the map in association with each other. Here, it is assumed that there are "n" supply positions, and IDs of the "n" supply positions are indicated by $Q_1$, $Q_2$, $Q_3$, ..., $Q_n$. The supply positions are positions which the EV stopped by and are an example of positions where the EV was located. The energy supply history information is an example of position history information indicating a history of the positions where the EV was located. In the case of collecting information from chargers, the energy supply history information is obtained by collecting information set for or recorded to the chargers. In the case of collecting information from smartphones, users may be allowed to input the information to applications of smartphones in any manner so that the information can be collected. For example, the users may manually input supply position IDs or may wirelessly or wiredly receive the supply position IDs from chargers or other apparatuses installed at supply positions and automatically input the received information to the applications of the smartphones. Further, information of the positions is not limited to supply position IDs. Coordinates on the map may be acquired by GPS to cause the acquired coordinates to be position information. In the case of collecting information of a position of a kind different from a supply position (for example, a home, a store or the like), coordinates of the position on the map may be acquired. If association with map information is possible, a name of a place, a facility or the like associated with the coordinates on the map may be acquired. The acquired information may be manually inputted to an application of a smartphone by a user.

The start amount of charge is an amount of battery charge at the time when each EV starts charging with a charger at a supply position. The end amount of charge is an amount of battery charge at the time when the EV ends charging with the charger at the supply position. Though the start amount of charge and the end amount of charge are expressed in units of kWh in the example of FIG. 2, they may be expressed in different units. A value obtained by subtracting the start amount of charge from the end amount of charge corresponds to electric power (an amount of energy) charged in the EV.

In the example of FIG. 2, an amount of charge at the time when EVi with the ID of 123456 starts charging at a supply position $Q_j$ is 3.9 kWh, and an amount of charge at the time when the charging ends at the supply position $Q_j$ is 34.4 kWh. Further, an amount of charge at the time when EVi starts charging at a supply position $Q_j'$, which is the next movement destination, is 6.3 kWh, and an amount of charge at the time when the charging ends at the supply position $Q_j'$ is 12.0 kWh.

Instead of or in addition to the start amount of charge and the end amount of charge, a start SOC (State of Charge) and an end SOC may be held. The SOC indicates a rate of actually accumulated electric energy to a battery capacity (a full charge capacity).

Battery state information of an EV according to the present embodiment may indicate at least one of the start amount of charge, the end amount of charge, the start SOC, the end SOC and the electric energy (the amount of energy) charged in an EV. The battery state information may be any other value if a battery state of an EV can be identified by the value. For example, in the case of acquiring EV information with an application of a smartphone or an ETC2.0 apparatus, a battery state (an amount of charge or SOC) at the position or timing may be acquired.

In addition, the energy supply history DB can hold at least one of a vehicle type of each EV, a date and time of starting charging, a date and time of ending charging and a full charge capacity.

If the date and time of starting charging or the date and time of ending charging does not exist in the energy supply history DB, entries of the DB may be chronologically arranged. Further, information of the energy supply history DB may be past information collectively acquired. Otherwise, information may be acquired in real time and sequentially added to the energy supply history DB.

The route information storage 22 stores a route information database (DB). FIG. 3(A) shows an example of the route information DB.

The route information DB holds a supply position ID, an ID of an adjacent supply position (an adjacent supply position ID) and distance information as route information. That a supply position is adjacent to an adjacent supply position means that there is no other supply position on a route from the supply position to the adjacent supply position. The actual route from the supply position to the adjacent supply position can be identified from map information. An EV can move from a supply position to an adjacent supply position using a route between the supply position and the adjacent supply position. There may be a plurality of adjacent supply positions for a supply position. Further, there may be one route from a supply position to an adjacent supply position, or there may be a plurality of routes to an adjacent supply position. In description below, it is assumed that there is one route from a supply position to an adjacent supply position.

The distance information indicates a distance from a supply position to an adjacent supply position. A distance is an example of a characteristic of a route. FIG. 3(B) shows another example of the route information DB. In this example, other pieces of characteristic information are held in addition to the distance information. That is, information of a gradient of each route (a cumulative altitude difference, an altitude difference between a start position and an end position of the route or the like; the same hereinafter) is held. Further, time required to move on the route is also held. The required time may be an average of values measured in the past or may be traveling time required to travel a distance at a predetermined velocity (speed). Further, information of energy required to travel the route is held. The required energy may be a statistic value of actual results (such as a mean value and a median) or may be a value calculated by a calculation formula or simulation. Further, meteorological information (such as temperature, humidity and weather) of the route is also held. As an example of characteristic information other than the pieces of characteristic information given here, information of whether two supply positions are adjacent to each other or not may be held. In this case, the route information DB may be provided with a column showing whether two supply positions are adjacent to each other or not, for each of all pairs of supply positions.

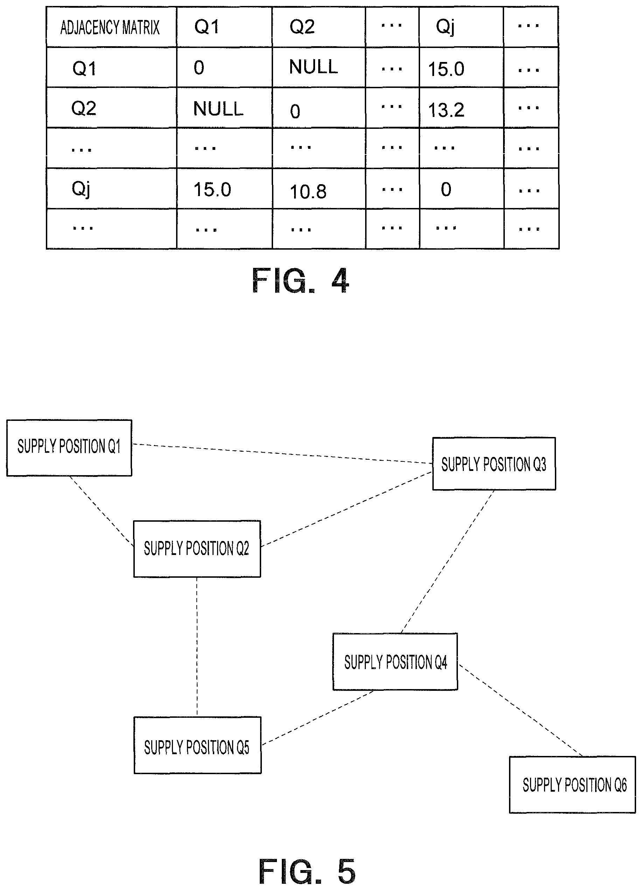

Though the examples in FIGS. 3(A) and 3(B), the route information DB is in a table format, the route information DB may be in a format of an adjacency matrix format. FIG. 4 shows an example of the adjacency matrix. The example in FIG. 4 is based on a case different from the case of FIG. 3. The adjacency matrix has identifiers of supply positions as row names and column names. If two supply positions are adjacent to each other, a characteristic of a route between the two supply positions is set for corresponding matrix element. For example, at least one of a distance between the two supply positions, information of a gradient between the two supply positions, a statistic value of an amount of energy consumption is set. If two supply positions are not adjacent to each other, a "NULL" value is set for a corresponding matrix element. The "NULL" value is an example of a value indicating whether two supply positions are adjacent to each other or not.

An adjacency matrix is applicable to a case where a route from one of two supply positions to the other is different from a route from the other to the one. For example, when it is assumed that the two supply positions are $Q_2$ and $Q_j$, and a route from the supply position $Q_2$ to the supply position $Q_j$ and a route from the supply position $Q_j$ to the supply position $Q_2$ are not the same, an adjacency matrix is applicable. Up and down lanes of a highway corresponds to an example of such a case. Similarly, in the case of a table format as in FIGS. 3(A) and 3(B) also, the table format is applicable to the case where the routes in the two directions are different from each other.

In an adjacency matrix, it is possible to have what is other than a supply position ID as a row name and a column name.

It is also possible to configure the route information using a common network structure description method.

FIG. 5 shows an example of a network structure of the route information. Nodes indicating supply position $Q_1$ to $Q_n$ are combined by links indicated by broken lines. Each of the links combines supply positions which are adjacent to each other. In the example of FIG. 5, it is seen that the supply position $Q_1$ is adjacent to each of the supply positions $Q_3$ and $Q_2$. Further, there is one route from the supply position $Q_1$ to the supply position $Q_3$, and there is also one route from the supply position $Q_1$ to the supply position $Q_2$. To each link, a characteristic of a route between supply positions indicated by combined nodes is assigned (in FIG. 5, characteristics of routes are not shown).

When a traveling area is divided in a plurality of areas, the route information may be held for each divided area. Of course, it is possible to hold one piece of route information for the whole traveling area.

In the network structure in FIG. 5, positions are the supply positions $Q_1$ to $Q_n$, which are positions determined in advance. In the case of targeting an arbitrary position (for example, in the case of regarding GPS information acquired by an application of a smartphone as a position), information in which the GPS information is associated with map information in a common method may be used as the route information.

The information acquirer 10 acquires an entry (energy supply history information) of at least one EV from the energy supply history DB. In the acquired energy supply history information, a history of energy supply at at least two supply positions is held for the EV. Further, the information acquirer 10 acquires route information from the route information DB. If route information is managed for each area, route information to which a supply position included in the acquired energy supply history information belongs to is acquired. The information acquirer 10 hands over the acquired energy supply history information and route information to the information processor 12.

The information processor 12 receives the energy supply history information and route information of the EV from the information acquirer 10. The information processor 12 estimates a movement route of the EV using these pieces of information and the route estimator 13. The movement route is a route or a combination of routes which the EV used to move from a certain supply position to another supply position.

First, the information processor 12 identifies a supply position $Q_j$' where charging was performed after a certain supply position $Q_j$ (hereinafter referred to as the next supply position $Q_j$') using the received energy supply history information. The certain supply position $Q_j$ corresponds to a first position as an example, and the next supply position $Q_j$' corresponds to a second potion as an example. The information processor 12 calculates a difference between an end amount of charge at the supply position $Q_j$ and a start amount of charge at the time of charging at the next supply position $Q_j$'. The calculated difference is set as an amount of energy consumption Eq for one movement of the EV. If a date and time of starting charging and a date and time of ending charging are stored in the energy supply history DB, the next supply position $Q_j$' can be identified highly accurately.

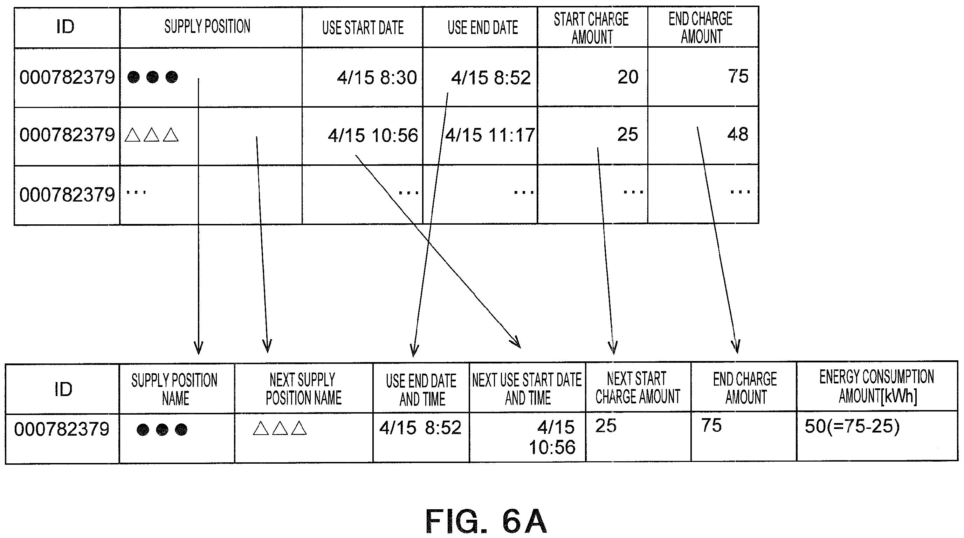

FIG. 6A shows an example of calculating the amount of energy consumption Eq. An example of calculating an amount of energy consumption for a certain one movement from energy supply history information of the same EV will be shown. In this example, the energy supply history includes dates and time of starting charging and dates and time of ending charging. Another supply position (a supply position of the second entry) having a date and time of starting use closest to a date and time of ending use at a certain supply position (a supply position of the first entry) is identified as the next supply position. That is, an ID of the supply position $Q_j$ (a previous-time supply position) indicated by three black circles and an ID of the next supply position $Q_j$' (a next-time supply position) indicated by three triangles are identified. Further, a date and time when charging at the supply position $Q_j$ ended (a date and time of ending a previous-time use ended), a date and time when charging at the supply position $Q_j$' starts (a date and time of starting the next-time use), an amount of charge at the time of starting charging at the supply position $Q_j$' (the next-time start amount of charge) and an amount of charge at the time of ending charging at the supply position $Q_j$ (a previous-time end amount of charge) are identified. By subtracting the next-time start amount of charge from the previous-time end amount of charge, an amount of energy consumption to move from the supply position $Q_j$ to the supply position $Q_j$' is calculated.

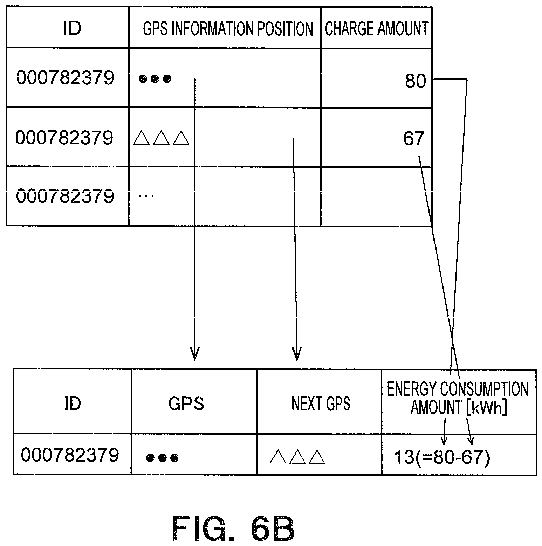

FIG. 6B shows another example of calculating the amount of energy consumption Eq. In this example, pieces of energy supply history information acquired from smartphones are used. The energy supply information shows an ID identifying an EV or a user of the EV, a GPS information position and an amount of charge. In this case, an amount of energy consumption is calculated by subtracting an amount of charge at a certain position from an amount of charge at the next position. The GPS information position may be coordinates acquired by GPS or a name of a place, a facility or the like associated with the coordinates on map information. Further, the position may be an energy supply position or may be a different kind of position. In the case of a different kind of position also, a similar process is possible by replacing the next supply position $Q_j$' and the supply position $Q_j$ with the next position and a certain position, respectively.

The information processor 12 generates a query which includes the ID of the supply position $Q_j$ and the ID of the next supply position $Q_j$' and hands over the query to the route estimator 13. This query requests estimation of a movement route which the EV used to move from the supply position $Q_j$ to the next supply position $Q_j$'. An identifier (a history ID) may be included in the query. Further, the information processor 12 hands over route information acquired from the information acquirer 10 to the route estimator 13. Instead of the information processor 12 handing over the route information, the route estimator 13 may acquire the route information from the route information DB by being triggered by receiving the query.

Using the ID of the supply position $Q_j$, the ID of the next supply position $Q_j$' and the route information received from the information processor 12, the route estimator 13 estimates a movement route which is a route or a combination of routes which the EV used to move from the supply position $Q_j$ to the next supply position $Q_j$' (movement route estimation). If there are a plurality of movement route candidates, one of the candidates is selected. A method for the estimation will be described later.

As an example, the estimated movement route can be expressed as a list in which identifiers of a plurality of supply positions are chronologically arranged (a supply position list). For example, if the EV passed through the supply positions $Q_4$, $Q_8$, ... after the supply position $Q_j$ and then reached the next supply position $Q_j$', the supply position list is expressed as information like "$Q_j{\rightarrow}Q_4{\rightarrow}Q_8{\rightarrow}...{\rightarrow}Q_j$'". That an EV passes through a supply position means that the EV travels on a route on which the supply position exists or on a route near the supply position, passing the supply position without charging there. In the case of "$Q_j{\rightarrow}Q_4{\rightarrow}Q_8{\rightarrow}...{\rightarrow}Q_j$'", it means that, after charging at the supply position $Q_j$, the EV is charged at the next supply position $Q_j$' without charging at the supply positions $Q_4$ or $Q_8$.

For the estimated movement route, the route estimator 13 calculates values of one or more items determined in advance, such as a distance of the movement route, time required to move on the movement route and gradient information of the movement route, and generates movement route estimation information which includes the calculated values, as information of the estimated movement route. The route estimator 13 returns the movement route estimation information to the information processor 12. Information identifying the estimated movement route (the above-described list in which nodes of supply positions are chronologically combined, or the like) may be included in the movement route estimation information.

The information processor 12 generates learning data in which the amount of energy consumption Eq and the movement route estimation information received from the route estimator 13 are associated with a history ID. If an item which is not necessary for model learning exists in the movement route estimation information, the item may be removed. The information processor 12 stores the generated learning data into a learning data database (DB) of the learning data storage 23. Thereby, learning data for one time is stored for the EV. The learning data storage 23 stores the learning data DB.

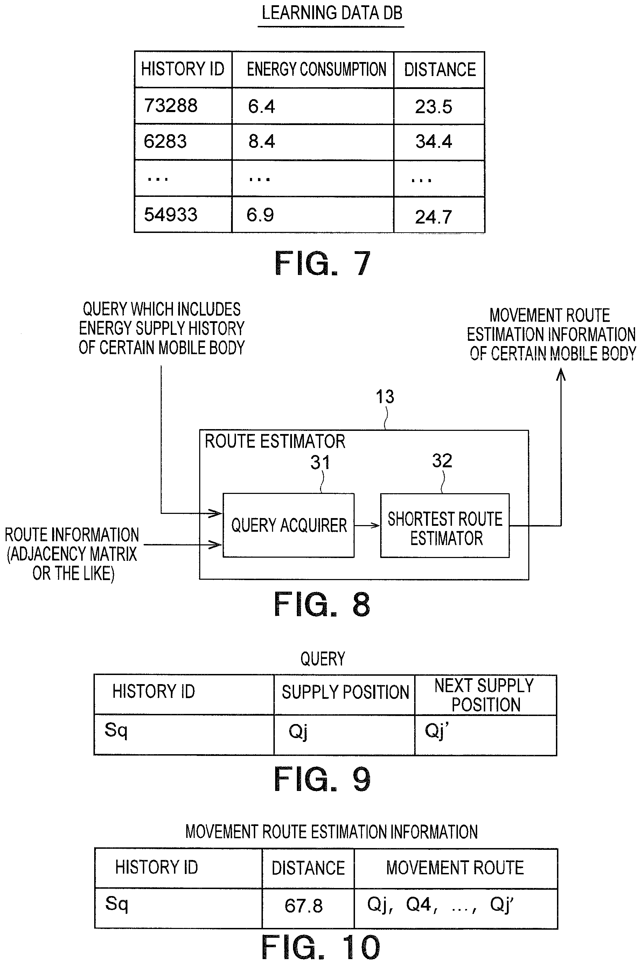

FIG. 7 shows an example of the learning data DB. The learning data DB includes a history ID, an amount of energy consumption and movement route estimation information for each movement route estimated for an EV. Here, as an example of the movement route estimation information, distance information of each estimated movement route is stored. In addition to the distance information, at least one of required time information, gradient information and a statistical value of amounts of energy consumption may be held.

By the information processor 12 performing a plurality of movement route estimations for a plurality of EVs, a plurality of pieces of learning data on the plurality of EVs are stored in the learning data DB.

FIG. 8 shows a detailed configuration example of the route estimator 13. The route estimator 13 is provided with a query acquirer 31 and a shortest route estimator 32.

The query acquirer 31 acquires a query which includes a supply position $Q_j$ where a certain EV was supplied with energy, a supply position $Q_j'$ where the EV was supplied with energy next, and a history ID from the information processor 12. FIG. 9 shows an example of the query. The history ID is indicated by Sq.

Further, the route estimator 13 acquires route information from the information processor 12 or the route information DB. In the case of dividing a traveling area in a plurality of areas and managing route information for each divided area, route information of an area to which both of the supply position $Q_j$ and the supply position $Q_j'$ belong is acquired. It is assumed here that the route information is expressed in an adjacency matrix (see FIG. 4). If the area of the supply position $Q_j$ and the area of the supply position $Q_j'$ are not the same, the route estimator 13 can return "NA" to the information processor 12.

The shortest route estimator 32 calculates the shortest movement route (the shortest route) from the supply position $Q_j$ to the next supply position $Q_j'$ using the supply position $Q_j$, the next supply position $Q_j'$ and the adjacency matrix. As a method for solving a shortest route problem, the Bellman Ford algorithm, the Gabow algorithm, the Warshall-Floyd algorithm and the like, including the Dijkstra's algorithm which is common, can be used. The shortest route estimator 32 generates movement route estimation information of the determined shortest route.

FIG. 10 shows an example of the generated movement route estimation information. As an example, the movement route estimation information includes the history ID, a distance of the estimated shortest route and information identifying the estimated shortest route. The information identifying the estimated shortest route is shown by the supply position list described above. The shortest route estimator 32 sends the generated movement route estimation information to the information processor 12. The information processor 12 associates an amount of energy consumption Eq and the movement route estimation information with each other and makes them learning data. The information processor 12 stores the learning data into the learning data DB. If an unnecessary item exists in the movement route estimation information, the movement route estimation information from which the item has been removed may be associated with the amount of energy consumption Eq to obtain the learning data. For example, if the movement route list is unnecessary for model building, the movement route list may be deleted from the movement route estimation information. However, an item which is unnecessary for model building may not be deleted but left in consideration of utilization for any other purpose than model building.

The configuration of the movement route estimation information in FIG. 10 is a mere example, and other configurations are also possible. For example, items of gradient information such as a cumulative altitude difference [m] from the next supply position and meteorological information such as outdoor temperature and humidity on a movement route to the next supply position may be added to be used for model building. General statistical values such as a mean value, a median and a cumulative value of the pieces of information exemplified here and other pieces of information may be added. Further, a statistical value of an amount of energy consumption required for movement to the next supply position may be added.

There is a possibility that two or more shortest routes from the supply position $Q_j$ to the next supply position $Q_j'$ exist. In this case, one shortest route may be randomly selected from among the two or more shortest routes. Further, one shortest route may be selected based on an arbitrary condition. For example, such a shortest route that time required for movement from the supply position $Q_j$ to the next supply position $Q_j'$ is the shortest may be selected. Otherwise, a shortest route with the smallest cumulative altitude difference may be selected. Otherwise, a shortest route where the weather is the best may be selected.

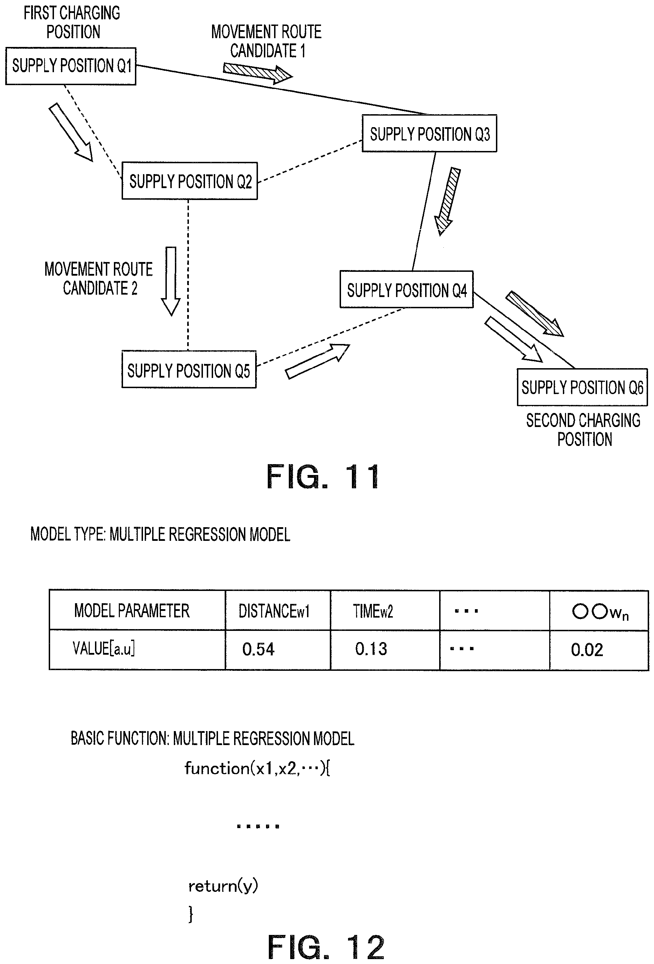

FIG. 11 shows an example of the shortest route estimated in a case where the first charging position is the supply position $Q_1$ and the next charging position is the supply position $Q_6$ in the network in FIG. 5 described before. In the example of FIG. 11, there are two candidates for a movement route to move from the supply position $Q_1$ to the supply position $Q_6$. Between the candidates, a movement route of "$Q_1 \rightarrow Q_3 \rightarrow Q_4 \rightarrow Q_6$" (a movement route candidate 1) is selected as the shortest route. The estimated movement route is indicated by a solid line.

The energy consumption model builder 14 (hereinafter referred to as the model builder 14) reads learning data from the learning data DB and constructs an energy consumption model (hereinafter referred to as a model) using the read learning data. As a method for constructing the model, there are a lot of methods such as artificial intelligence, machine learning, black-box modeling and such white-box modeling that defines a physical model. The black-box modeling is a method for performing modeling using regression, a neural network, SVM or statistics when characteristics of a target are unknown. The white-box modeling is modeling performed by defining a physical model and the like when characteristics of a target are known. In the present embodiment, any model may be built with any model method.

The model builder 14 may build a model by receiving instruction information specifying necessary information from the operator through the inputting circuit 16 or may build a model according to information specified beforehand. As an example, the operator specifies a model type (a form of a regression model or the like) and an optimization algorithm used for estimation of model parameters as the instruction information.

The model builder 14 reads a basic function corresponding to the model type from a predetermined storage device (a memory, a hard disk device, an SSD or the like). The predetermined storage stores a basic function for each of a plurality of model types, and the model builder 14 reads a basic function corresponding to a relevant model type. Values of model parameters of the basic function is unknown at this point of time, and the model builder 14 estimates the values of the model parameters included in the read basic function using the learning data. The model builder 14 stores a set of the read basic function (the model type) and the estimated model parameters into an energy consumption model database (DB) as an energy consumption model (a model).

If the model type is a multiple regression model, the basic function is expressed as shown below.
[Formula 1]

$$y = w_0 + w_1 x_1 + w_2 x_2 + w_3 x_3 + \ ... \ + w_n x_n \ ... \ (1)$$

Here, "$w_0, w_1, w_2, w_3, ..., w_n$" are model parameters to be estimated; "$x_1, x_2, x_3, ..., x_n$" are input variables (explanatory variables); and "$y$" is an output variable (a purpose variable). In order to absorb differences among measurement units of the explanatory variables, the purpose variable and all the explanatory variables may be normalized to a mean value of 0 and a variance of 1 (scaling). As examples of the explanatory variables, distance, required time and outdoor temperature are given. These are items included in the learning data. For example, "$x_1$", "$x_2$" and "$x_3$" are distance, required time and outdoor temperature, respectively. The explanatory variables may be different values calculated from a plurality of items included in the learning data. For example, a velocity obtained by dividing a distance by required time may be an explanatory variable. The model parameters can be determined by a well-known optimization algorithm such as a maximum likelihood method and a least squares method.

The energy consumption model DB stores the model generated by the model builder 14. FIG. 12 shows an example of model data stored in the case of a multiple regression model. In this example, 0.54 which is a value of the distance parameter "$w_1$" and 0.13 which is a value of the required time parameter "$w_2$" are stored as model parameters. Here, "**" indicates an arbitrary explanatory variable name. Further, data of the basic function is stored. The basic function is a function of inputting explanatory variables "$x_1, x_2, ...$" and outputting the purpose variable "$y$". In a body part of the function (a part shown by "..." in FIG. 12), a program code using the model parameters such as "$w_1$" and "$w_2$" is written. Though an example of a multiple regression model is shown here, other models can be also similarly stored.

The route estimation apparatus 1 in FIG. 1 may be a single apparatus or may be a system configured with a plurality of apparatuses. If the route estimation apparatus 1 is configured with a plurality of apparatuses, those apparatuses may be connected via a communication network. For example, it is possible to take out, among the components shown in FIG. 1, the controller 15, the inputting circuit 16 and the outputting circuit 17 to make them a user operation device and make the other components 11 to 14 and 21 to 24 the route estimation apparatus.

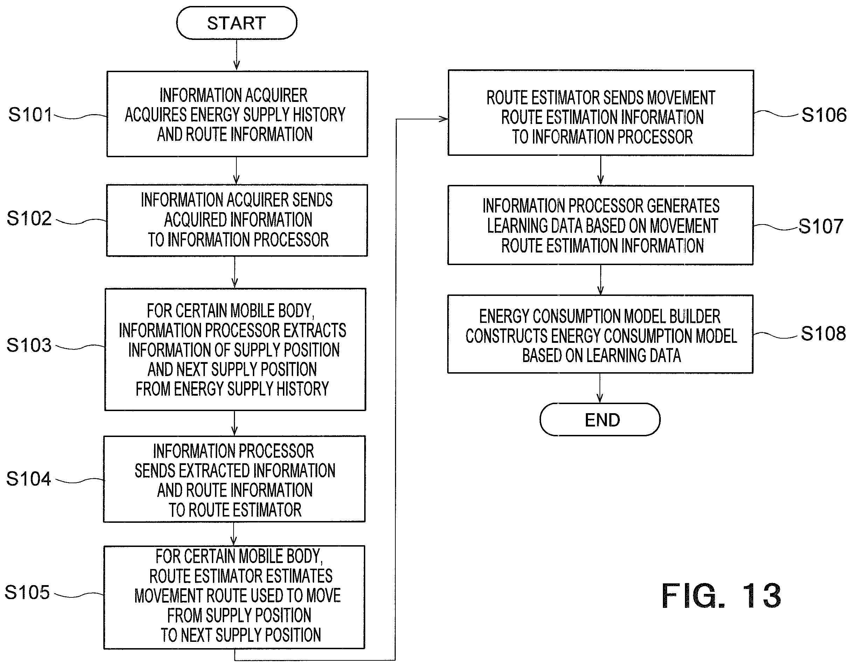

FIG. 13 is a flowchart showing an operation example of the route estimation apparatus 1 according to the present embodiment.

The information acquirer 10 acquires energy supply history information and route information (S101).

The information acquirer 10 sends the acquired energy supply history information and route information to the information processor 12 (S102).

The information processor 12 extracts, for a certain EV (a mobile body), information identifying a supply position and the next supply position from the energy supply history information (5103). Further, an amount of energy the mobile body consumed to move from the supply position to the next supply position is calculated.

The information processor 12 sends the extracted information and the route information to the route estimator 13 (S104).

The route estimator 13 estimates, for the certain EV, a movement route used to move from the supply position to the next supply position (S105).

The route estimator 13 sends information of the estimated movement route (movement route estimation information) to the information processor 12 (S106).

The information processor 12 generates learning data based on the movement route estimation information (S107). Specifically, the information processor 12 extracts values of items required for model building from the movement route estimation information and generates learning data which includes the extracted values and the amount of energy consumption.

The model builder 14 builds an energy consumption model (a model) based on the learning data (S108). After that, the controller 15 may display the model on the outputting circuit 17. Further, information showing the movement route estimated by the route estimator 13 (a supply position list or the like) may be displayed on the outputting circuit 17.

As described above, according to the present embodiment, a first position of a mobile body and a second position, which is a movement destination after the first position, are identified based on energy supply history information (position history information) of the mobile body. A movement route used by the mobile body to move from the first position to the second position is estimated with route information (see FIGS. 3 to 5) showing routes among a plurality of positions and characteristics (distance, required time, gradient information, required energy and the like) of the routes.

Thus, since a movement route of a mobile body can be acquired from position history information and route information by calculation, it is possible to easily acquire information of the movement route of the mobile body. Therefore, it is possible to acquire the information of the movement route at a low cost.

(Second embodiment)

The present embodiment shows an example of generating route information. In the present embodiment, the route information is generated with traffic control data (traffic observation data).

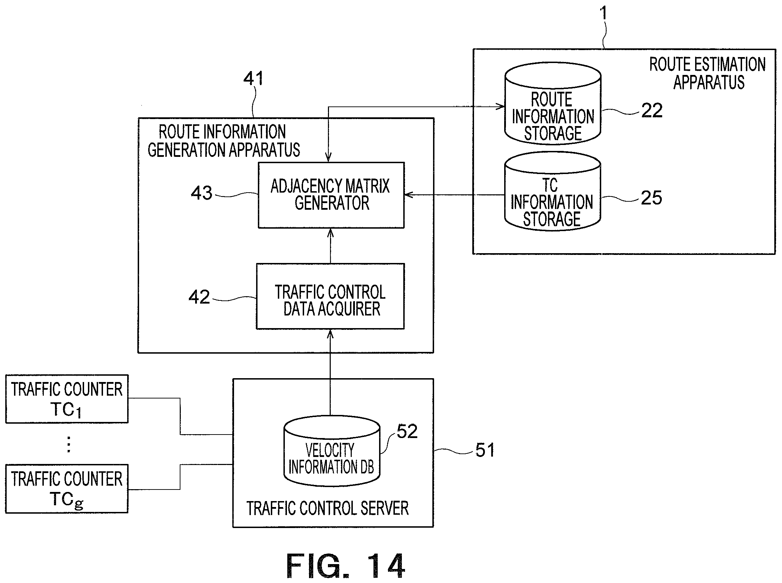

FIG. 14 shows a route information generation apparatus 41 and a traffic control server 51. The route information generation apparatus 41 is connected to the route estimation apparatus 1 via a communication network. It is assumed that data indicating whether two supply positions are adjacent to each other or not (adjacency relationship data) is stored in the route information storage 22 of the route estimation apparatus 1 of the present embodiment. The adjacency relationship data may be an adjacency matrix in which whether two supply positions are adjacent to each other or not is stored in elements or may be data in a table format. In the present embodiment, the route information generation apparatus 41 generates the route information by calculating a characteristic of a route between adjacent supply positions and adding the calculated route characteristic to the adjacent relationship data. Further, the route estimation apparatus 1 is provided with a TC (traffic counter) information storage 25. The TC information storage 25 is provided with a TC information database (DB).

The TC information DB holds data in which a supply position, an adjacent supply position and IDs of one or more TCs between the supply positions are mutually associated.

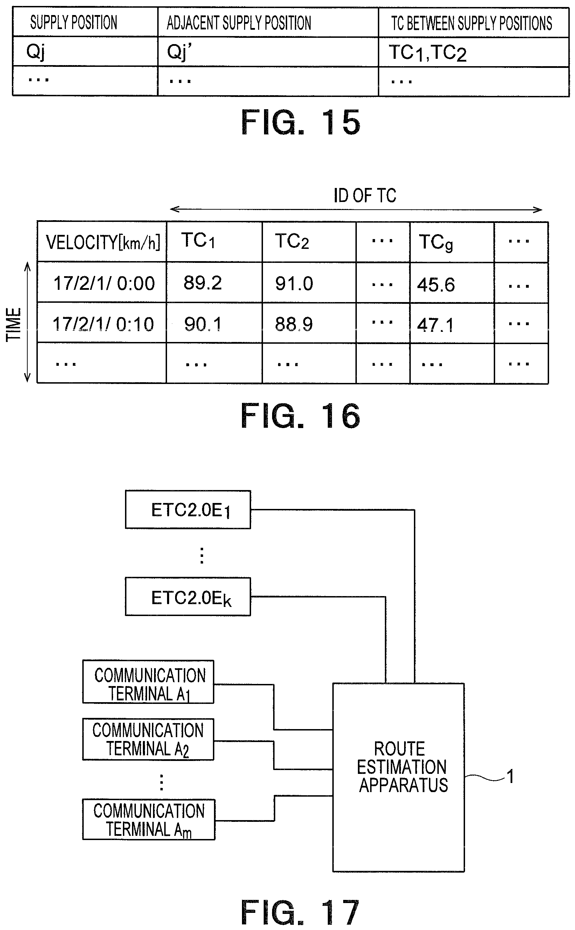

FIG. 15 shows an example of the TC information DB. Data of the first entry of this example shows that traffic counters $TC_1$, $TC_2$, ... are arranged between a supply position $Q_j$ and an adjacent supply position $Q_j'$. It is not necessary that the traffic counters $TC_1$, $TC_2$, ... are arranged in that order.

The route information generation apparatus 41 is provided with a traffic control data acquirer 42 and an adjacency matrix generator 43. The traffic control server 51 is provided with a velocity information storage 52. The velocity information storage 52 stores a velocity information database (DB).

The traffic control server 51 is connected to traffic counters $TC_1$ to $TC_g$ arranged at "g" positions via a communication network. The traffic control server 51 communicates with the traffic counters $TC_1$ to $TC_g$ to acquire traffic control data which is data of the traffic counters $TC_1$ to $TC_g$. Here, velocity information is acquired as the traffic control data. The velocity information holds a value of a velocity [km/h] measured at certain time in a certain TC (traffic counter). The traffic control server 51 stores the velocity information into the velocity information DB. Instead of the velocity information, information of an occupancy rate or a traffic volume may be acquired as the traffic control data.

FIG. 16 shows a data example of the velocity information DB. The velocity information DB is in a table format. Times and IDs of TCs are assigned to row names and column names, respectively. A value of a velocity is stored in each element of the table.

The traffic control data acquirer 42 of the route information generation apparatus 41 is connected to the traffic control server 51 via a communication network and acquires velocity information from the traffic control server 51 as traffic control data. The traffic control server 51 and the route information generation apparatus 41 may be the same apparatus. In this case, the traffic control data acquirer 42 can read the velocity information from the velocity information DB. The traffic control data acquirer 42 hands over the acquired velocity information to the adjacency matrix generator 43.

The adjacency matrix generator 43 acquires adjacency relationship data stored in the route information storage 22 from the route estimation apparatus 1. Further, the adjacency matrix generator 43 acquires TC information stored in the TC information DB from the route estimation apparatus 1.

The adjacency matrix generator 43 calculates, for supply positions in an adjacency relationship, a route characteristic using the velocity information and the TC information and generates route information by adding the calculated route characteristic to the adjacency relationship data. Here, an adjacency matrix is generated as the route information.

As the route characteristic, the adjacency matrix generator 43 calculates a statistical value of velocity values of traffic counters existing between a certain supply position $Q_j$ and an adjacent supply position $Q_j'$, a sum of tracking time or the like. As examples of the statistical value, a mean value, a median, a maximum value and a minimum value are given. For example, for all traffic counters existing on a relevant route, an average velocity is calculated for data in the velocity information DB corresponding to a predetermined time and the average velocity is made characteristic information of the route. The adjacency matrix generator 43 adds the calculated characteristic information to a relevant element of an adjacency matrix. By performing this process for all combinations of supply positions which are in an adjacency relationship, the adjacency matrix is generated. The sum of tracking time is required traveling time calculated in the case of specifying a range covered by each traffic counter and assuming that a vehicle has traveled at a velocity measured by the traffic counter (for example, a maximum value) within the covered range.

The adjacency matrix generator 43 transmits the generated adjacency matrix to the route estimation apparatus 1. The route estimation apparatus 1 stores the received adjacency matrix into the route information DB as route information. This route information becomes the route information used in the first embodiment.

For example, the route information generation apparatus 41 acquires traffic control data (velocity information) at predetermined time intervals and generates (updates) an adjacency matrix. The acquired velocity information is held in an internal storage of the route information generation apparatus 41 or an external storage accessible from the route information generation apparatus 41. Therefore, a plurality of adjacency matrices (pieces of route information) corresponding to velocity information acquisition times are accumulated in the route information DB.

The information communicator 18 (see FIG. 1) of the route estimation apparatus 1 acquires a corresponding adjacency matrix with time information (a date and time of starting use and a date and time of ending the use) in energy supply history information to be estimated as a key. For example, an adjacency matrix corresponding to the above-described acquisition time which is included within time from the date and time of starting use to the date and time of ending the use is acquired.

Though the route information generation apparatus 41 and the route estimation apparatus 1 are separate apparatuses, the route information generation apparatus 41 may be configured integrally with the route estimation apparatus 1.

Further, the controller 15 of the route estimation apparatus 1 may acquire data of TCs from the TCs or a management apparatus managing the TCs through communication and build a velocity information DB using the acquired data. The controller 15 generates route information using the generated velocity information DB and adjacency relationship data and stores the generated route information into the route information DB.

(Third embodiment)

A method for selecting the shortest route is used as a route estimation method in the first embodiment. In the present embodiment, however, an estimation method is decided according to a condition from among a plurality of movement route estimation methods.

An example of performing movement route estimation mainly for one EV is shown in the first or second embodiment. In the present embodiment, however, a situation is assumed in which movement route estimation is performed for a plurality of EVs. Some examples of a condition for deciding an estimation method from among a plurality of estimation methods will be shown below.

(First example)

The route estimator 13 or the information processor 12 randomly selects an estimation method according to a certain parameter "$\alpha$". The parameter "$\alpha$" specifies a probability of each estimation being selected. For example, when there are two estimation methods A and B, it is specified by the parameter "$\alpha$" that the estimation methods A and B are selected with a probability of 40% and a probability of 60%, respectively. The parameter "$\alpha$" is specified by the operator of the present apparatus and is inputted with the inputting circuit 16.

As an example, the estimation method A is a method of selecting a movement route with the shortest distance, and the estimation method B is a method of selecting a movement route with the smallest gradient change (cumulative altitude difference or the like). A user (a driver of an EV) really does not necessarily select the shortest route, and it is conceivable that a user who selects a movement route with a small gradient change exists.

Otherwise, it is conceivable that the estimation method A is the method of selecting a movement route with the shortest distance, and the estimation method B is a method of selecting a movement route with the second or third shortest distance.

Otherwise, it is also conceivable that the estimation method A is the method of selecting a movement route with the shortest distance and the estimation method B is a method of selecting a movement route corresponding to a traffic situation (for example, a movement route which does not pass through a part where a traffic volume is equal to or above a predetermined value).

Thus, by appropriately switching an estimation method to be used, movement route estimation that is more suitable for an actual situation becomes possible. In the case of selecting an estimation method from among three or more estimation methods, the selection can be similarly performed.

(Second example)

An estimation method to be used is selected according to at least one of conditions of a day of the week, a time zone and a place. For example, a plurality of conditions about a day of the week, a time zone and a place, such as "up lane toward Tokyo in the evening on Sunday", are prepared, and an estimation method is associated with each condition. At the time of estimating a movement route, a condition satisfied by an energy supply history to be processed is identified among the plurality of conditions, and an estimation method corresponding to the identified condition is used.

(Third example)

An estimation method to be used is selected based on a model of a car navigation apparatus. A method for supporting a user in selection of a route differs according to a model of a car navigation apparatus. Therefore, an estimation method is selected based on a type of a car navigation apparatus mounted on an EV. For example, an estimation method A is used in the case of the latest car navigation apparatus compatible with a certain standard or specifications, and an estimation method B is used in the case of an old car navigation apparatus which is not compatible with the standard or specifications. As an example, the estimation method A is a method of selecting a movement route with the smallest sum of tracking time, and the method B is a method of selecting a movement route with the shortest distance. Further, there may be a case where, even in the case of the same car navigation apparatus, a supporting method differs according to a model of a vehicle on which the car navigation is mounted. Therefore, an estimation method to be used may be selected based on a model of a car navigation apparatus and a model of a vehicle.

(Fourth example)

An estimation method to be used is decided based on data (for example, velocitys) of traffic counters installed on routes among a plurality of supply positions. For example, in a case where there are a plurality of candidates for a movement route from a supply position to the next supply position, a mean value of velocitys of traffic counters existing on each movement route candidate is calculated. Variation (variance) of the mean values among the candidates is calculated, and an estimation method A is used if the variation is equal to or above a threshold, and an estimation method B is used if the variation is small. The estimation method A is, for example, an estimation method of selecting a movement route with the shortest required time, and the estimation method B is an estimation method of selecting a movement route with the shortest distance. Each of the estimation methods A and B may be any other method than the examples given here.

(Fifth example)

Movement route estimation is performed with a plurality of estimation methods. The number of methods the estimated movement routes of which are the same (that is, the number of estimation methods which have outputted the same movement route) is counted, and a movement route for which a value of the counting result is the largest is selected. The plurality of estimation methods can be arbitrary methods. The estimation methods given in the above first to fourth examples may be combined.

(Fourth embodiment)

In the present embodiment, a confidence coefficient (a weight) is given to an estimated movement route, and the given confidence coefficient is used at the time of constructing a model. As an example, the confidence coefficient is expressed by a real number. An example of calculating the confidence coefficient is shown below.

Movement route estimation is performed with a plurality of estimation methods. A movement route is selected from among estimated movement routes by an arbitrary method. How many movement routes which are the same as the selected movement route are included among all the estimated movement routes (that is, the number of estimation methods which have outputted the same movement routes at the selected movement route) is counted. A confidence coefficient is calculated from a ratio of the counted value to the number of all the estimated movement routes (that is, the number of used estimation methods). Specifically, the confidence coefficient is calculated by the following formula.

Confidence coefficient=(the number of estimation methods which have outputted selected route/the number of all estimation methods)

Another example of calculating the confidence coefficient will be shown. The number of branch points included in each of the estimated movement routes is counted. For example, in the example of FIG. 11 described before, in the movement route "$Q_1 \rightarrow Q_3 \rightarrow Q_4 \rightarrow Q_6$" estimated for movement from the supply position $Q_1$ to the supply position $Q_6$, there are three branches at the supply position $Q_3$, and there are three branches at the supply position $Q_4$. In this case, the number of branch points is 6 (=3+3). A confidence coefficient is calculated by dividing 1 by the number of branch points (the counted value). Specifically, the confidence coefficient is calculated by the following formula.

$$\text{Confidence coefficient} = 1/\text{the number of branch points existing before reaching next supply position}$$

A method for utilizing the confidence coefficient will be described below.

In the case of deciding model parameters by a least squares method, a weighted least squares method using a confidence coefficient as a weight can be implemented. For example, as shown in Formula (2) below, model parameters can be decided so that a sum of squares of residuals "J" is minimized with a confidence coefficient "e". If the multiple regression model described before is assumed, "y" corresponds to a purpose variable, and "f(x)" corresponds to linear combination of explanatory variables and coefficients (see the right-hand side of Formula (1)). Here, "i" indicates a number of learning data (a sample). As the value of the confidence coefficient is larger, a larger weight is given. Thereby, it becomes possible to calculate highly accurate model parameters.

[Formula 2]

$$J = \sum_{i=1}^{n} \frac{(y_i - f(x_i))^2}{e_i} \quad \cdots (2)$$

Further, in the case of deciding model parameters by a boosting method, the confidence coefficient can be used as a weight at the time of generating an initial value of occurrence distribution of samples used in boosting.

(Fifth embodiment)

A case is assumed where, for some EVs, actual movement histories can be acquired by an ETC2.0. FIG. 17 shows a configuration according to the present embodiment. The route estimation apparatus 1 is connected to ETC2.0 apparatuses $E_1$ to $E_k$ arranged at "k" positions via a communication network. The route estimation apparatus 1 acquires movement route history data from the ETC2.0 apparatus $E_1$ to $E_k$ via the communication network. Otherwise, the route estimation apparatus 1 communicates with communication terminals $A_1$ to $A_m$ possessed by EV users to acquire the movement route history data. Each of the communication terminals $A_1$ to $A_m$ is provided with a GPS function. As examples of the communication terminals, a car navigation apparatus and a smartphone are given.

It is assumed that, at the time of estimating a movement route of a certain EV, the route estimator 13 of the route estimation apparatus 1 can identify, when another EV moves from the same supply position to the same next supply position in the same time zone as the EV, a movement route of that another EV from movement route history data. In this case, the movement route of that another EV is used as the movement route of the EV which is the estimation target. The time zone refers to, for example, any one of a plurality of time zones obtained by dividing one day. A condition about the time zone may not be set.

(Sixth embodiment)

In the present embodiment, an example of acquiring energy supply history information to be stored into the energy supply history DB in FIG. 1 will be described.

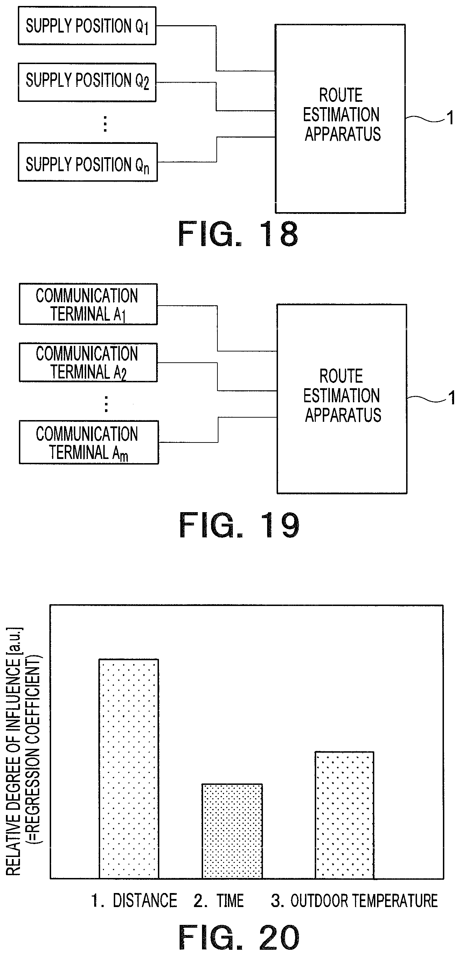

FIG. 18 shows a system configuration for the route estimation apparatus 1 to acquire energy supply history information. The route estimation apparatus 1 is connected to "n" supply positions $Q_1$ to $Q_n$ ("n" is equal to or larger than 2) via a communication network. The route estimation apparatus 1 acquires pieces of energy supply history information (supply position use histories) from the "n" supply positions $Q_1$ to $Q_n$ ("n" is equal to or larger than 2). The controller 15 of the route estimation apparatus 1 arranges the acquired pieces of energy supply history information into the format of the energy supply history DB and stores the pieces of information into the energy supply history DB.

FIG. 19 shows another configuration for the route estimation apparatus 1 to acquire energy supply history information. The route estimation apparatus 1 is connected to terminal apparatuses $A_1$ to $A_m$ possessed by EV users, such as smartphones, via a communication network. The route estimation apparatus 1 acquires pieces of energy supply history information (supply position use histories) from the communication terminals $A_1$ to $A_m$. The controller 15 arranges the acquired pieces of energy supply history information into the format of the energy supply history DB and stores the pieces of information into the energy supply history DB.

(Seventh embodiment)

At the time of creating learning data from the energy supply history DB by movement route estimation, an energy supply history which satisfies each of the following conditions may be used. By adding such a condition, it is possible to build a highly accurate model and enhance accuracy of prediction of an amount of energy consumption. It is also possible to combine the following conditions.

(Condition example 1)

An energy supply history is to be extracted from the energy supply history DB for the same user under the condition that a difference between a date and time of ending use of a supply position and a date and time of starting use of the next supply position should be within "X" hours. Here, "X" may be an arbitrary value. For example, "X" may be 6. If this condition is not satisfied, the energy supply history is not used to generate learning data (that is, movement route estimation is not performed). For example, in the example of FIG. 6A described before, since a difference between the date and time of starting the next use and the date and time of ending the previous use, for the first and second entries, is within six hours, the condition is satisfied. Therefore, learning data is created for the energy supply history.

(Condition example 2)

A sum of tracking time and a difference between a date and time of ending use of a charger and a date and time of starting use of the next supply position are compared, and a difference between the sum of tracking time and the difference is "Y" hours or more, the energy supply history is not used. Here, "Y" may be an arbitrary value. For example, "Y" may be 2 or 3.

(Eighth embodiment)

In the present embodiment, an example of factor analysis using an energy consumption model will be shown. Though a regression model is used as the energy consumption model, a statistical/machine learning model and a physical model, which are used for general factor analysis such as ANOVA (analysis of variance), main component analysis and factor analysis, are also usable.
FIG. 20 shows a result of factor analysis. In FIG. 20, factor analysis is performed with a multiple regression model of (Equation 3) below. Though (Formula 3) is similar to (Formula 1) described before, it is written again.
[Formula 3]

$$y = f(x) = wx \quad \dots \quad (3)$$

As shown below, "y" in (Formula 3) indicates amounts of energy consumption (purpose variables) of "R" estimated movement routes.

$$[\text{Formula 4}]$$
$$y = \{y_r : r = 1, \dots, R\}$$

As shown below, "x" indicates "E" explanatory variables thought to be related with the amounts of energy consumption of the "R" estimated move routes, respectively.

$$[\text{Formula 5}]$$
$$x = \{x_r : r = 1, \dots, R\}$$

As shown below, "$x_r$" indicates "E" explanatory variables for the "r-th" piece of learning data.

$$[\text{Formula 6}]$$
$$X_r = \{x_{r,e} : e = 1, \dots, E\}$$

As shown below, model parameters "w" are calculated with a maximum likelihood method or least squares method as stated in the description of the first embodiment.

[Formula 7]

$$w = \{w_e : e = 1, ..., E\}$$

FIG. 20 shows an example in which a calculated weight "w" is displayed on the outputting circuit 17. Weights to three explanatory variables, that is, weights to a distance, required time and outdoor temperature, respectively, are shown. A degree of influence of each explanatory variable is shown. Therefore, by presenting the analysis result in FIG. 20 to the operator of the route estimation apparatus 1, it is possible to make the operator grasp which factor is relatively highly influential to energy consumption.

(Ninth embodiment)

In the present embodiment, prediction of energy consumption utilizing an energy consumption model will be described.

An energy consumption model calculated in any of the first to seventh embodiments is transmitted from the route estimation apparatus 1 to a prediction server 61 and stored into the prediction server 61. The prediction server 61 predicts an amount of energy consumption for a certain EV using the energy consumption model. Further, calculation of a travelable distance (a cruising range) and the like are also performed based on the predicted amount of energy consumption.

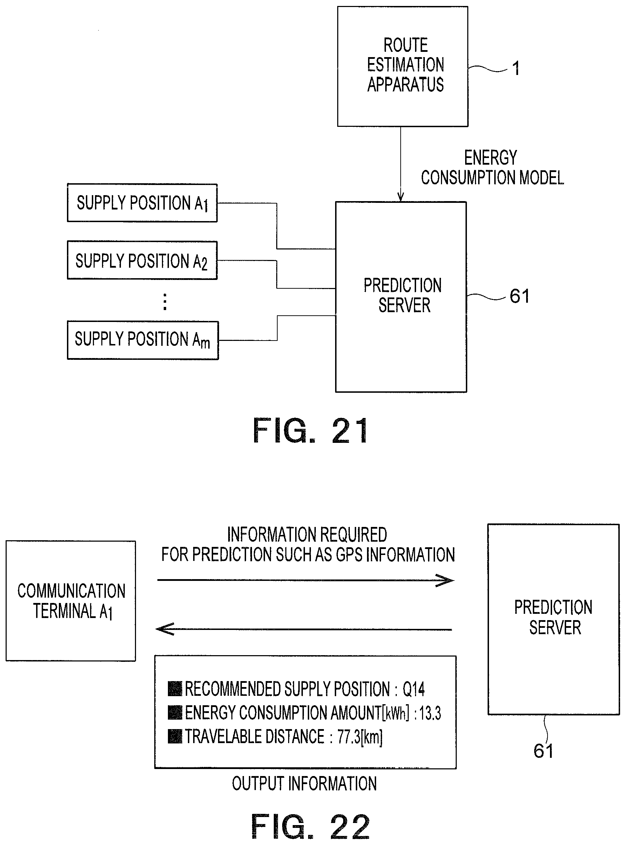

FIG. 21 is an overall configuration diagram of a prediction system according to the present embodiment. The prediction system is provided with the prediction server 61 and a plurality of communication terminals $A_1$ to $A_m$. The plurality of communication terminals $A_1$ to $A_m$ are terminals (car navigation apparatuses, smartphones and the like) possessed by a plurality of EV users. The prediction server 61 is connected to the plurality of communication terminals $A_1$ to $A_m$ via a communication network. The prediction server 61 is communicable with the route estimation apparatus 1 and acquires an energy consumption model from the route estimation apparatus 1. The prediction server 61 is provided with a processor such as a CPU, a storage device (a memory, a hard disk, an SSD and the like), a communication circuit and the like. By reading and executing a program stored in the storage device by the processor, a process of the prediction server 61 is realized. In the storage device, the energy consumption model acquired from the route estimation apparatus 1, data required for an operation of the program, data generated in a process of processing, data acquired from the communication terminals and the like are stored.

FIG. 22 is a diagram for illustrating an operation example of the prediction server 61. The prediction server 61 acquires information required for energy consumption prediction using a model from the communication terminal $A_1$ of a user of an EV which is currently traveling. For example, the information includes GPS information and an energy supply history, a destination and the like.

The prediction server 61 predicts energy consumption. For example, a movement distance from a supply position where charging was performed last is calculated from the GPS information and the energy supply history, and an amount of energy consumption is predicted from the movement distance and an energy consumption model. If explanatory variables of the energy consumption model include an item other than movement distance, for example, outdoor temperature, information of outdoor temperature is also acquired from the communication terminal $A_1$ or another server. The prediction server 61 calculates a current amount of residual energy from the predicted amount of energy consumption and calculates a movable distance (a travelable distance) with the amount of residual energy. Further, if the amount of residual energy is below a threshold, the prediction server 61 looks for a candidate for the next supply position. The candidate for the next supply position is a supply position existing within a reachable range with the amount of residual energy. The prediction server 61 predicts energy consumption required to move to each supply position and identifies a supply position which can be reached with the amount of residual energy as the candidate for the next supply position (a recommended supply position). The prediction server 61 transmits output information showing the recommended supply position, the amount of energy consumption and the travelable distance to the communication terminal $A_1$. The communication terminal $A_1$ displays the received output information on its screen. The operation of the prediction server 61 which has been described here is a mere example, and other operations are also possible. For example, search for a supply position candidate may be performed irrespective of whether the amount of residual energy is below the threshold.

Though an example of using GPS information and the like received from a communication terminal of a user of an EV is shown in the present embodiment, the present embodiment is not limited to the form. For example, if the explanatory variables of the energy consumption model include such that uses data of traffic counters, the data may be received from the traffic counters. Further, data of the energy supply history may be acquired from a supply position.

(Tenth embodiment)

A hardware configuration of the route estimation apparatus 1 according to the first to ninth embodiments will be described.

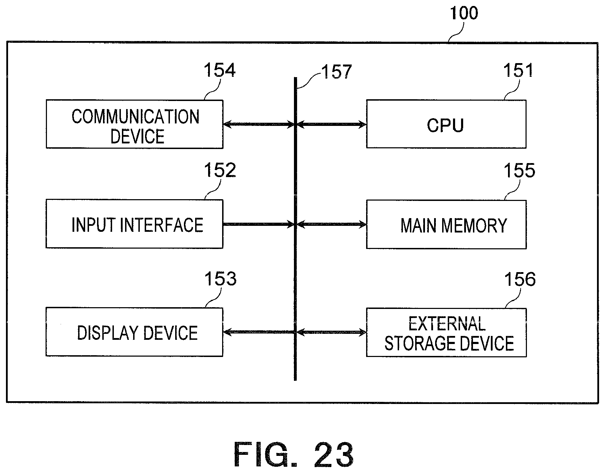

FIG. 23 shows a hardware configuration of the route estimation apparatus 1 according to the present embodiments. The route estimation apparatus 1 according to the present embodiments is configured with a computer apparatus 100. The computer apparatus 100 is provided with a CPU 151, an input interface 152, a display device 153, a communication device 154, a main memory 155 and an external storage device 156, which are mutually connected via a bus 157. The prediction server 61 can be realized with a hardware configuration similar to that of FIG. 23.

The CPU (Central Processing Unit) 151 executes a computer program which realizes each of the above-described functional components of the route estimation apparatus 1 on the main memory 155. By the CPU 151 executing the computer program, each functional component is realized.

The input interface 152 is a circuit for inputting an operation signal from an input device such as a keyboard, a mouse or a touch panel to the route estimation apparatus 1.

The display device 153 displays data or information outputted from the route estimation apparatus 1. The display device 153 is, for example, an LCD (Liquid Crystal Display), a CRT (Cathode-Ray Tube) display or a PDP (a plasma display panel) but is not limited thereto. The data or information outputted from the computer apparatus 100 can be displayed by the display device 153.

The communication device 154 is a circuit for the route estimation apparatus 1 to wirelessly or wiredly communicate with an external apparatus. Energy supply history and route information can be inputted from the external apparatus via the communication device 154. Information inputted from the external apparatus can be stored into a DB. The information communicator 18 can be built on the communication device 154.

The main memory 155 stores a program for movement route estimation and energy consumption model building, data required for execution of the program, data generated by execution of the program and the like. The program is developed and executed on the main memory 155. The main memory 155 is, for example, a RAM, a DRAM or an SRAM but is not limited thereto. The storage in each embodiment may be built on the main memory 155.

The external storage device 156 stores the program for movement route estimation and energy consumption model building, the data required for execution of the program, the data generated by execution of the program and the like. The program and data are read onto the main memory 155 at the time of executing movement route estimation and energy consumption model building. The external storage device 156 is, for example, a hard disk, an optical disk, a flash memory or a magnetic tape but is not limited thereto. The storage in each embodiment may be built on the external storage device 156.

The program for movement route estimation and energy consumption model building may be installed in the computer apparatus 100 in advance or may be stored in a recording medium such as a CD-ROM. Further, the program may be uploaded on the Internet.

The computer apparatus 100 may be provided with one or more CPUs 151, one or more input interfaces 152, one or more display devices 153, one or more communication devices 154 and one or more main memories 155. Peripheral equipment such as a printer and a scanner may be connected.

Further, the route estimation apparatus 1 may be configured with a single computer apparatus 100 or may be configured as a system constituted by a plurality of computer apparatuses 100 which are mutually connected.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

[Clauses]

1. A route estimation apparatus comprising:

an information communicator (18) configured to acquire position history information of a mobile body from an information apparatus via a communication network; and
a route estimator (13) configured to estimate a movement route used by the mobile body to move from a first position to a second position, using the position history information and route information indicating routes among a plurality of positions and characteristics of the routes.

2. The route estimation apparatus according to Clause 1, wherein the information apparatus is a data communication device which is arranged on: an energy supplier to supply energy to the mobile body; a terminal apparatus used by a user of the mobile body; or a predetermined spot in an area which includes the plurality of positions and is communicable with at least one of the terminal apparatus and the mobile body.

3. The route estimation apparatus according to Clause 1 or 2, wherein the position history information includes information identifying the positions and information of amounts of energy of the mobile body at the positions.

4. The route estimation apparatus according to Clause 3, wherein the position history information includes an identifier identifying the mobile body or the user of the mobile body.

5. The route estimation apparatus according to any one of Clauses 1 to 4, wherein
a plurality of candidates for the movement route exist; and
the route estimator (13) selects the movement route from among the plurality of candidates based on distances of the plurality of candidates.

6. The route estimation apparatus according to Clause 5, wherein the route estimator (13) selects a candidate with the shortest distance among the plurality of candidates.

7. The route estimation apparatus according to any one of Clauses 1 to 6, wherein
a plurality of candidates for the movement route exist; and
the route estimator (13) selects the movement route from among the plurality of candidates based on gradient changes of the plurality of candidates.

8. The route estimation apparatus according to any one of Clauses 1 to 7, wherein
a plurality of candidates for the movement route exist; and
the route estimator (13) calculates amounts of energy required for the mobile body to move to the plurality of candidates and selects the movement route from among the plurality of candidates based on the required amounts of energy.

9. The route estimation apparatus according to any one of Clauses 1 to 8, wherein
the information communicator (18) acquires data of traffic counters installed on the routes; and
the route estimator (13) estimates the movement route based on the data of the traffic counters.

10. The route estimation apparatus according to Clause 1, wherein
the mobile body moves from the first position to the second position in a first time zone;
the information communicator (18) acquires information indicating a movement route used for another mobile body to move from the first position to the second position in the first time zone; and
the route estimator (13) decides the movement route of the mobile body to be the same as the movement route of that another mobile body indicated by the information.

11. The route estimation apparatus according to any one of Clauses 1 to 10, wherein the route estimator (13) selects one estimation method from among a plurality of estimation methods for estimating the movement route and estimates the movement route based on the selected estimation method.

12. The route estimation apparatus according to Clause 11, wherein the route estimator (13) randomly selects the estimation method from among the plurality of estimation methods.

13. The route estimation apparatus according to Clause 11, wherein
the route estimator (13) selects the estimation method based on at least one of a week of a day, a time zone and a place.

14. The route estimation apparatus according to Clause 11, wherein
the information communicator (18) acquires data of traffic counters installed on the routes; and
the route estimator (13) selects the estimation method based on the data of the traffic counters.

15. The route estimation apparatus according to any one of Clauses 1 to 14, comprising:

an information processor (12) configured to calculate an amount of energy consumed for the mobile body to move from the first position to the second position, based on pieces of energy state information of the mobile body at the first position and the second position; and

a model builder (14) configured to build a model in which a movement distance is associated with an amount of energy consumption, based on the amount of energy consumption and a distance of the estimated movement route.

16. The route estimation apparatus according to Clause 15, wherein

the information processor (12) generates a plurality of pieces of learning data each of which includes the amount of energy consumption and the distance of the estimated movement route, and sets a confidence coefficient of the estimated movement route for each of the plurality of pieces of learning data; and

the model builder (14) builds the model based on the plurality of pieces of learning data and the confidence coefficient of each of the pieces of learning data.

17. The route estimation apparatus according to Clause 16, wherein the model builder (14) sets the confidence coefficient based on the number of route branch points included in the estimated movement route.

18. The route estimation apparatus according to any one of Clauses 1 to 17, wherein the plurality of points are a plurality of energy supply points for supplying energy to mobile bodies.

19. The route estimation apparatus according to any one of Clauses 1 to 18, wherein the characteristics of the routes indicate at least distances of the routes, amounts of energy consumption required for movement on the routes or weathers of the routes.

20. A route estimation method comprising:

acquiring position history information of a mobile body from an information apparatus via a communication network; and

estimating a movement route used by the mobile body to move from a first position to a second position, using the position history information and route information indicating routes among a plurality of positions and characteristics of the routes.

21. A non-transitory computer readable medium having a computer program stored therein which causes a computer to perform route estimation method comprising:

acquiring position history information of a mobile body from an information apparatus via a communication network; and

estimating a movement route used by the mobile body to move from a first position to a second position, using the position history information and route information indicating routes among a plurality of positions and characteristics of the routes.

## Claims

1.  A route estimation apparatus comprising:

    an information communicator (18) configured to acquire position history information of a mobile body from an information apparatus via a communication network; and

    a route estimator (13) configured to estimate a movement route used by the mobile body to move from a first position to a second position, using the position history information and route information indicating routes among a plurality of positions and characteristics of the routes.

2.  The route estimation apparatus according to Claim 1, wherein the information apparatus is a data communication device which is arranged on: an energy supplier to supply energy to the mobile body; a terminal apparatus used by a user of the mobile body; or a predetermined spot in an area which includes the plurality of positions and is communicable with at least one of the terminal apparatus and the mobile body.

3.  The route estimation apparatus according to Claim 1 or 2, wherein the position history information includes information identifying the positions and information of amounts of energy of the mobile body at the positions.

4. The route estimation apparatus according to Claim 3, wherein the position history information includes an identifier identifying the mobile body or the user of the mobile body.

5. The route estimation apparatus according to any one of Claims 1 to 4, wherein
a plurality of candidates for the movement route exist; and
the route estimator (13) selects the movement route from among the plurality of candidates based on distances of the plurality of candidates.

6. The route estimation apparatus according to Claim 5, wherein the route estimator (13) selects a candidate with the shortest distance among the plurality of candidates.

7. The route estimation apparatus according to any one of Claims 1 to 6, wherein
a plurality of candidates for the movement route exist; and
the route estimator (13) selects the movement route from among the plurality of candidates based on gradient changes of the plurality of candidates.

8. The route estimation apparatus according to any one of Claims 1 to 7, wherein
a plurality of candidates for the movement route exist; and
the route estimator (13) calculates amounts of energy required for the mobile body to move to the plurality of candidates and selects the movement route from among the plurality of candidates based on the required amounts of energy.

9. The route estimation apparatus according to any one of Claims 1 to 8, wherein
the information communicator (18) acquires data of traffic counters installed on the routes; and
the route estimator (13) estimates the movement route based on the data of the traffic counters.

10. The route estimation apparatus according to Claim 1, wherein
the mobile body moves from the first position to the second position in a first time zone;
the information communicator (18) acquires information indicating a movement route used for another mobile body to move from the first position to the second position in the first time zone; and
the route estimator (13) decides the movement route of the mobile body to be the same as the movement route of that another mobile body indicated by the information.

11. The route estimation apparatus according to any one of Claims 1 to 10, wherein the route estimator (13) selects one estimation method from among a plurality of estimation methods for estimating the movement route and estimates the movement route based on the selected estimation method.

12. The route estimation apparatus according to Claim 11, wherein the route estimator (13) randomly selects the estimation method from among the plurality of estimation methods.

13. The route estimation apparatus according to Claim 11, wherein
the route estimator (13) selects the estimation method based on at least one of a week of a day, a time zone and a place.

14. The route estimation apparatus according to Claim 11, wherein
the information communicator (18) acquires data of traffic counters installed on the routes; and
the route estimator (13) selects the estimation method based on the data of the traffic counters.

15. A route estimation method comprising:

acquiring position history information of a mobile body from an information apparatus via a communication network; and
estimating a movement route used by the mobile body to move from a first position to a second position, using the position history information and route information indicating routes among a plurality of positions and characteristics of the routes.

FIG. 1

ENERGY SUPPLY HISTORY DB

| EV | SUPPLY POSITION | START CHARGE AMOUNT [kWh] | END CHARGE AMOUNT [kWh] |
|---|---|---|---|
| 201653 | Q4 | 12.7 | 23.5 |
| 123456 | Qj | 3.9 | 34.4 |
| ... | ... | ... | ... |
| 123456 | Qj' | 6.3 | 12.0 |
| ... | ... | ... | ... |
| 728579 | Q3 | 2.87 | 10.9 |

## FIG. 2

| SUPPLY POSITION | ADJACENT SUPPLY POSITION | DISTANCE[km] |
|---|---|---|
| Q1 | Qj' | 42.1 |
| ... | ... | ... |
| Qj | Q4 | 24.7 |
| ... | ... | ... |
| Qn | Q49 | 64.1 |

(A) EXAMPLE OF ROUTE INFORMATION DB

| SUPPLY POSITION | ADJACENT SUPPLY POSITION | DISTANCE[km] | GRADIENT | REQUIRED TIME | REQUIRED ENERGY | WEATHER |
|---|---|---|---|---|---|---|
| Q1 | Qj' | 42.1 | ... | ... | ... | ... |
| ... | ... | ... | ... | ... | ... | ... |
| Qj | Q4 | 24.7 | ... | ... | ... | ... |
| ... | ... | ... | ... | ... | ... | ... |
| Qn | Q49 | 64.1 | ... | ... | ... | ... |

(B) ANOTHER EXAMPLE OF ROUTE INFORMATION DB

## FIG. 3

| ADJACENCY MATRIX | Q1 | Q2 | · · · | Qj | · · · |
|---|---|---|---|---|---|
| Q1 | 0 | NULL | · · · | 15.0 | · · · |
| Q2 | NULL | 0 | · · · | 13.2 | · · · |
| · · · | · · · | · · · | · · · | · · · | · · · |
| Qj | 15.0 | 10.8 | · · · | 0 | · · · |
| · · · | · · · | · · · | · · · | · · · | · · · |

# FIG. 4

SUPPLY POSITION Q1

SUPPLY POSITION Q3

SUPPLY POSITION Q2

SUPPLY POSITION Q4

SUPPLY POSITION Q5

SUPPLY POSITION Q6

# FIG. 5

| ID | SUPPLY POSITION | | USE START DATE | USE END DATE | START CHARGE AMOUNT | END CHARGE AMOUNT |
|---|---|---|---|---|---|---|
| 000782379 | ●●● | | 4/15 8:30 | 4/15 8:52 | 20 | 75 |
| 000782379 | △△△ | | 4/15 10:56 | 4/15 11:17 | 25 | 48 |
| 000782379 | ... | | ... | ... | ... | ... |

| ID | SUPPLY POSITION NAME | NEXT SUPPLY POSITION NAME | USE END DATE AND TIME | NEXT USE START DATE AND TIME | NEXT START CHARGE AMOUNT | END CHARGE AMOUNT | ENERGY CONSUMPTION AMOUNT[kWh] |
|---|---|---|---|---|---|---|---|
| 000782379 | ●●● | △△△ | 4/15 8:52 | 4/15 10:56 | 25 | 75 | 50(=75-25) |

## FIG. 6A

EP 3 450 919 A1

| ID | GPS INFORMATION POSITION | CHARGE AMOUNT |
|---|---|---|
| 000782379 | ●●● | 80 |
| 000782379 | △△△ | 67 |
| 000782379 | ⋯ | |

| ID | GPS | NEXT GPS | ENERGY CONSUMPTION AMOUNT [kWh] |
|---|---|---|---|
| 000782379 | ●●● | △△△ | 13(=80-67) |

# FIG. 6B

LEARNING DATA DB

| HISTORY ID | ENERGY CONSUMPTION | DISTANCE |
|---|---|---|
| 73288 | 6.4 | 23.5 |
| 6283 | 8.4 | 34.4 |
| . . . | . . . | . . . |
| 54933 | 6.9 | 24.7 |

## FIG. 7

QUERY WHICH INCLUDES
ENERGY SUPPLY HISTORY
OF CERTAIN MOBILE BODY

MOVEMENT ROUTE
ESTIMATION INFORMATION
OF CERTAIN MOBILE BODY

13

ROUTE ESTIMATOR

31

32

QUERY ACQUIRER

SHORTEST ROUTE
ESTIMATOR

ROUTE INFORMATION
(ADJACENCY MATRIX
OR THE LIKE)

## FIG. 8

QUERY

| HISTORY ID | SUPPLY POSITION | NEXT SUPPLY POSITION |
|---|---|---|
| Sq | Qj | Qj' |

## FIG. 9

MOVEMENT ROUTE ESTIMATION INFORMATION

| HISTORY ID | DISTANCE | MOVEMENT ROUTE |
|---|---|---|
| Sq | 67.8 | Qj, Q4, ..., Qj' |

## FIG. 10

FIRST CHARGING
POSITION

SUPPLY POSITION Q1

MOVEMENT ROUTE
CANDIDATE 1

SUPPLY POSITION Q3

SUPPLY POSITION Q2

MOVEMENT ROUTE
CANDIDATE 2

SUPPLY POSITION Q4

SUPPLY POSITION Q5

SUPPLY POSITION Q6

SECOND CHARGING
POSITION

# FIG. 11

MODEL TYPE: MULTIPLE REGRESSION MODEL

| MODEL PARAMETER | DISTANCE$w1$ | TIME$w2$ | $\cdots$ | $\bigcirc\bigcirc w_n$ |
|---|---|---|---|---|
| VALUE[a.u] | 0.54 | 0.13 | $\cdots$ | 0.02 |

BASIC FUNCTION: MULTIPLE REGRESSION MODEL

function(x1,x2,$\cdots$){

$\blacksquare$ $\blacksquare$ $\blacksquare$ $\blacksquare$ $\blacksquare$

return(y)

}

# FIG. 12

START

S101 — INFORMATION ACQUIRER ACQUIRES ENERGY SUPPLY HISTORY AND ROUTE INFORMATION

S102 — INFORMATION ACQUIRER SENDS ACQUIRED INFORMATION TO INFORMATION PROCESSOR

S103 — FOR CERTAIN MOBILE BODY, INFORMATION PROCESSOR EXTRACTS INFORMATION OF SUPPLY POSITION AND NEXT SUPPLY POSITION FROM ENERGY SUPPLY HISTORY

S104 — INFORMATION PROCESSOR SENDS EXTRACTED INFORMATION AND ROUTE INFORMATION TO ROUTE ESTIMATOR

S105 — FOR CERTAIN MOBILE BODY, ROUTE ESTIMATOR ESTIMATES MOVEMENT ROUTE USED TO MOVE FROM SUPPLY POSITION TO NEXT SUPPLY POSITION

S106 — ROUTE ESTIMATOR SENDS MOVEMENT ROUTE ESTIMATION INFORMATION TO INFORMATION PROCESSOR

S107 — INFORMATION PROCESSOR GENERATES LEARNING DATA BASED ON MOVEMENT ROUTE ESTIMATION INFORMATION

S108 — ENERGY CONSUMPTION MODEL BUILDER CONSTRUCTS ENERGY CONSUMPTION MODEL BASED ON LEARNING DATA

END

FIG. 13

EP 3 450 919 A1

FIG. 14

| SUPPLY POSITION | ADJACENT SUPPLY POSITION | TC BETWEEN SUPPLY POSITIONS |
|---|---|---|
| Qj | Qj' | $TC_1, TC_2$ |
| ... | ... | ... |

## FIG. 15

ID OF TC

| VELOCITY[km/h] | $TC_1$ | $TC_2$ | ... | $TC_g$ | ... |
|---|---|---|---|---|---|
| 17/2/1/ 0:00 | 89.2 | 91.0 | ... | 45.6 | ... |
| 17/2/1/ 0:10 | 90.1 | 88.9 | ... | 47.1 | ... |
| ... | ... | ... | ... | ... | ... |

TIME

## FIG. 16

## FIG. 17

SUPPLY POSITION $Q_1$

SUPPLY POSITION $Q_2$

⋮

SUPPLY POSITION $Q_n$

ROUTE ESTIMATION APPARATUS

1

## FIG. 18

COMMUNICATION TERMINAL $A_1$

COMMUNICATION TERMINAL $A_2$

⋮

COMMUNICATION TERMINAL $A_m$

ROUTE ESTIMATION APPARATUS

1

## FIG. 19

RELATIVE DEGREE OF INFLUENCE [a.u.] (=REGRESSION COEFFICIENT)

1. DISTANCE   2. TIME   3. OUTDOOR TEMPERATURE

## FIG. 20

ROUTE
ESTIMATION
APPARATUS — 1

ENERGY
CONSUMPTION MODEL

SUPPLY POSITION A₁

SUPPLY POSITION A₂

⋮

SUPPLY POSITION Aₘ

PREDICTION
SERVER — 61

FIG. 21

INFORMATION REQUIRED
FOR PREDICTION SUCH AS GPS INFORMATION

COMMUNICATION
TERMINAL A₁

PREDICTION
SERVER

■ RECOMMENDED SUPPLY POSITION : Q14
■ ENERGY CONSUMPTION AMOUNT[kWh] : 13.3
■ TRAVELABLE DISTANCE : 77.3[km]

61

OUTPUT INFORMATION

FIG. 22

100

| 154 | 157 | 151 |
|---|---|---|
| COMMUNICATION DEVICE | | CPU |
| 152 | | 155 |
| INPUT INTERFACE | | MAIN MEMORY |
| 153 | | 156 |
| DISPLAY DEVICE | | EXTERNAL STORAGE DEVICE |

FIG. 23

Europäisches
Patentamt

European
Patent Office

Office européen
des brevets

# EUROPEAN SEARCH REPORT

Application Number

EP 18 16 1168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2015/168161 A1 (RAYCHEV VESELIN [CH] ET AL) 18 June 2015 (2015-06-18)<br>* abstract *<br>* paragraphs [0008] - [0010], [0067] - [0072]; figures 1-3 *<br>----- | 1,2,4-9, 15<br>3 | INV.<br>G01C21/34<br>G01C21/26 |
| A | EP 3 121 084 A2 (LG ELECTRONICS INC [KR]) 25 January 2017 (2017-01-25)<br>* paragraph [0274] *<br>----- | 7 | |
| A | US 2015/177009 A1 (SAITO DAISUKE [JP] ET AL) 25 June 2015 (2015-06-25)<br>* abstract *<br>* paragraphs [0008] - [0010], [0067] - [0072]; figures 1-3 *<br>----- | 1-9,15 | |
| A | WO 2011/098195 A1 (TOMTOM INT BV [NL]; DE HAAS TEUN [NL]; ABEN SJOERD [NL]; GEUL SANDRA []) 18 August 2011 (2011-08-18)<br>* page 9, line 7 - page 9, line 35 *<br>----- | 1-9,15 | |
| A | WO 2012/009088 A2 (ZONAR SYSTEMS INC [US]; BRINTON BRETT [US]; MCQUADE CHARLES MICHAEL [U]) 19 January 2012 (2012-01-19)<br>* columns 5,14,15 *<br>----- | 2,3 | TECHNICAL FIELDS SEARCHED (IPC)<br><br>G01C<br>G08G |

~~The present search report has been drawn up for all claims~~

| Place of search | Date of completion of the search | Examiner |
|---|---|---|
| The Hague | 13 September 2018 | Pascheka, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

Application Number

EP 18 16 1168

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9, 15

☐ The present supplementary European search report has been drawn up for those parts of the European patent application which relate to the invention first mentioned in the claims (Rule 164 (1) EPC).

**Europäisches Patentamt**

**European Patent Office**

**Office européen des brevets**

## LACK OF UNITY OF INVENTION
## SHEET B

Application Number

EP 18 16 1168

The Search Division considers that the present European patent application does not comply with the requirements of unity of invention and relates to several inventions or groups of inventions, namely:

1. claims: 1-9, 15

    estimating the route of a mobile device

1.1. claims: 1, 3, 15(completely); 2(partially)

    estimating the route based on energy of the mobile body

1.2. claim: 2(partially)

    being arranged on a predetermined spot in an area

1.3. claims: 7-9

    selecting from a plurality of candidate routes
                        ---

2. claim: 10

    inferring a route from another mobile body
                        ---

3. claims: 11-14

    selecting an estimation method
                        ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 18 16 1168

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2018

| Patent document cited in search report | | | Publication date | Patent family member(s) | | | Publication date |
|---|---|---|---|---|---|---|---|
| US 2015168161 | A1 | | 18-06-2015 | NONE | | | |
| EP 3121084 | A2 | | 25-01-2017 | CN | 106364488 | A | 01-02-2017 |
| | | | | EP | 3121084 | A2 | 25-01-2017 |
| | | | | KR | 20170010643 | A | 01-02-2017 |
| | | | | US | 2017038775 | A1 | 09-02-2017 |
| US 2015177009 | A1 | | 25-06-2015 | JP | 6035917 | B2 | 30-11-2016 |
| | | | | JP | 2014016172 | A | 30-01-2014 |
| | | | | US | 2015177009 | A1 | 25-06-2015 |
| | | | | US | 2018209800 | A1 | 26-07-2018 |
| | | | | WO | 2014006666 | A1 | 09-01-2014 |
| WO 2011098195 | A1 | | 18-08-2011 | TW | 201202665 | A | 16-01-2012 |
| | | | | WO | 2011098195 | A1 | 18-08-2011 |
| WO 2012009088 | A2 | | 19-01-2012 | EP | 2593655 | A2 | 22-05-2013 |
| | | | | US | 2010280734 | A1 | 04-11-2010 |
| | | | | WO | 2012009088 | A2 | 19-01-2012 |

EPO FORM P0459

For more details about this annex : see Official Journal of the European Patent Office, No. 12/82